# EUROPEAN PATENT APPLICATION

(11) **EP 1 063 144 A2**
(43) Date of publication of application: **27.12.2000**
(21) Application number: 99116527.5
(22) Date of filing: 24.08.1999
(51) Int. Cl.: B61K 3/00, F16D 65/06

(54) **Friction management brake shoe**

(30) Priority: 24.06.1999 US 339477
(71) Applicant: WESTINGHOUSE AIR BRAKE COMPANY, Wilmerding, PA 15148 (US); Kelsan Technologies Corporation, North Vancouver, British Columbia V7P 1M9 (CA)
(72) Inventor: Formolo, Joseph F., Laurinburg, North Carolina 28353 (US); Shute, Bruce W., West End, North Carolina 27376 (US); Chiddick, Kelvin S., North Vancouver, B.C. V7N 2S6 (CA)
(74) Representative: Petri, Stellan

(57) **Abstract**

The present invention provides a friction management brake shoe (10) adapted to engage the tread and the flange of a wheel of a railway vehicle via which the railway vehicle is guidably supported on a railed track. The friction management brake shoe (10) comprises a backing plate (2) having a flange member (8). There is a brake lining (6) affixed to the backing plate (2) and having a braking surface engageable with the wheel tread of a railway vehicle. The brake lining (6) includes a first friction composition material formed with at least one of a solid high positive friction modifier and a solid very high positive friction modifier which establishes a required friction level between the wheel tread and the railed track for stopping a train. The brake shoe (10) also has a flange part affixed to the flange member (8) of the backing plate (2), such flange part having a friction surface engageable with the wheel flange of a railroad car wheel. The flange part includes a second friction material (12) formed with a solid low coefficient of friction modifier which establishes a friction level of between about 0.08 and 0.15 at an interface between the wheel flange and the railed track.

## Description

### CROSS-REFERENCE TO RELATED APPLICATIONS

This application is a continuation-in-part of co-pending patent application Serial No. 09/126,476, filed July 30, 1998, now abandoned.

### FIELD OF THE INVENTION

The present invention relates, in general, to vehicle type braking equipment and, more particularly, this invention relates to a composition type brake block member for use in a railway type vehicle brake system and, even still more specifically, the invention relates to the development of a new type brake shoe and brake shoe friction material that accomplishes both the required braking levels and applies a solid friction modifier film on the wheel and rail that creates a substantially optimum friction level between the wheel and rail.

### BACKGROUND OF THE INVENTION

Many railroad locomotives and cars use on tread braking which provides the braking effort by forcing a brake shoe friction composition material against the tread of the steel wheel. Brake shoe engagement with the wheel tread produces friction that dissipates the energy of momentum in the form of heat. In order for such braking to be effective, wheel rotation is required. The adhesion due to the friction between the wheel tread and rail tends to maintain such wheel rotation, as the wheel is braked.

Excessive wheel wear and brake shoe change outs have been found to be cyclically high during the winter season. One theory attributes this, at least in part, to the more pronounced cleaning effect that the brake shoe has on the wheel as the result of the higher moisture contact during wintertime. In that such cleaning action tends to increase the contact friction; or adhesion, between the wheel and rail, increased contact stresses are created in the wheel. Such contact stresses being particularly high during the guiding and steering action of the wheel set, particularly, when encountering track curvature.

The combination of braking effort through friction between the brake shoe and wheel tread surface and the adhesion between the wheel and rail translates into thermal and contact stresses of the wheel, which often result in wheel damage. High thermal and contact stresses are known to contribute to minute failure of the wheel tread due to a condition known as spalling.

Another related problem encountered by some railroads where high levels of retardation are required is wheel sliding, which results in wheel tread flat spots. Such flat spots have a deleterious effect on equipment, lading, and passengers due to the high vibration and noise produced by the flat spots. Repairing such a damaged wheel requires removal of the wheel and subsequent machining of the wheel tread to remove the flat spot.

Further, it is generally well known that significant benefits have been realized by lubrication of the rail gage face or wheel flange. These benefits are in both fuel savings and reduced rail and flange wear. However, the achievement of the desired lubrication has involved the use of separate lubrication equipment. This equipment can be in the form of on-board, locomotive mounted units that provide lubrication to the wheel flange as well as traditional wayside lubricators that apply lubricant to the rail on areas where the track curves. Wayside lubricators have been a part of railroading for many years. Placed in curved territory to reduce rail and wheel flange wear (and in some cases to reduce squeal), curve oilers were never really thought of in terms of fuel efficiency. The emphasis in recent years has shifted to on-board units designed to provide lubrication on tangent track as well as curved track. This emphasis is on reducing rolling resistance and, thus, reduce fuel consumption.

It would be quite advantageous to the railroad industry if a single unit, a brake shoe, in particular, would not only provide the necessary friction for satisfactory braking but also provide lubrication and friction modifiers for the rail and flange at the same time.

### SUMMARY OF THE INVENTION

The present invention provides a friction management brake shoe adapted to engage the tread and the flange of a wheel of a railway vehicle via which the railway vehicle is guidably supported on a railed track. The friction management brake shoe comprises a backing plate having a flange member. There is a brake lining affixed to the backing plate and having a braking surface engageable with the wheel tread of a railway vehicle. The brake lining includes a first friction composition material formed with at least one of a solid high positive friction modifier and a solid very high positive friction modifier which establishes a required friction level between the wheel tread and the railed track for stopping a train. The brake shoe also has a flange part affixed to the flange member of the backing plate and having a friction surface engageable with the wheel flange of a railroad car wheel. The flange part includes a second friction material formed with a solid low coefficient of friction modifier which establishes a friction level of between about 0.08 and 0.15 at an interface between the wheel flange and the railed track.

### OBJECTS OF THE INVENTION

It is, therefore, one of the primary objects of the present invention to formulate a compound which provides satisfactory braking while transferring material to the wheel.

Another object of the present invention is to design a new type brake shoe which will contact not only the wheel tread but also the wheel flange.

It is still another object of the present invention to provide a brake shoe which will extend the useful service life of a railroad wheel.

Yet another object of the present invention is to provide a brake shoe which will apply a solid friction modifier film to the wheel and rail.

An additional object of the invention is to provide a brake shoe which will reduce energy consumption.

Still another object of the invention is to provide a brake shoe which will reduce noise created at the rail/wheel interface.

In addition to the various objects and advantages of the present invention which have been described in some specific detail above, various additional objects and advantages of the invention will become much more readily apparent to those persons who are particularly skilled in the relevant brake shoe friction art from the following more detailed description of such invention, particularly, when such detailed description is taken in conjunction with the attached drawing Figures and with the appended claims.

### BRIEF DESCRIPTION OF THE DRAWINGS

Figure 1 is a plan view of the back of a full flange friction management brake shoe showing a steel backing plate for mounting the brake shoe to a railway vehicle.

Figure 2 is a side elevation view of the full flange friction management brake shoe illustrated in Figure 1.

Figure 3 is a cross-sectional view of the full flange friction management brake shoe shown in Figure 1 taken across the lines III-III.

Figure 4 is a cross-sectional view of the full flange friction management brake shoe shown in Figure 1 taken across the lines IV-IV.

Figure 5 is a cross-sectional view of the full flange friction management brake shoe shown in Figure 2 taken across the lines V-V.

Figure 6 is a plan view of the back of a partial flange friction management brake shoe showing an alternative embodiment of a steel backing plate for mounting the brake shoe to a railway vehicle.

Figure 7 is a side elevation view of the partial flange friction management brake shoe illustrated in Figure 6.

Figure 8 is a cross-sectional view of the partial flange friction management brake shoe shown in Figure 6 taken across the lines VIII-VIII.

Figure 9 is a cross-sectional view of the partial flange friction management brake shoe shown in Figure 6 taken across the lines IX-IX.

Figure 10 is a cross-sectional view of the partial flange friction management brake shoe shown in Figure 7 taken across the lines X-X.

### BRIEF DESCRIPTION OF THE PRESENTLY PREFERRED AND VARIOUS ALTERNATE EMBODIMENTS OF THE INVENTION

Prior to proceeding to the more detailed description of the present invention, it should be noted that for the sake of clarity in understanding the invention, identical components with identical functions have been designated with identical reference numerals throughout the drawing Figures.

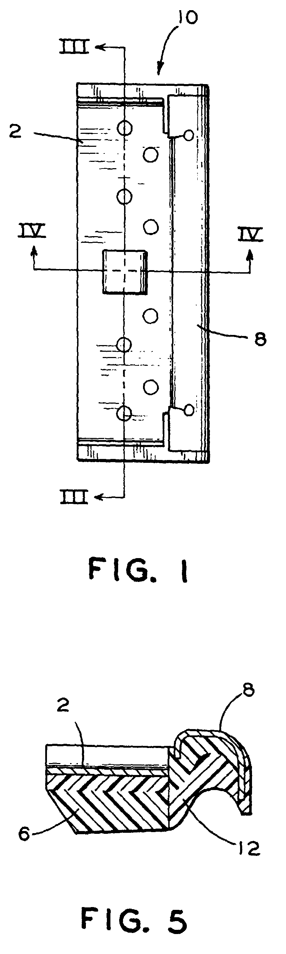

Reference is now made, more specifically, to Figures 1,2 and 3. Illustrated therein is a brake shoe, which is generally designated 10, comprising a backing plate 2 and having a key bridge 4 for affixing the brake shoe 10 to a brake head (not shown) by conventional means such as a brake shoe key (also not shown). Affixed to such backing plate 2 is a molded brake block 6. The backing plate 2 of the present invention differs from most conventional backing plates in that there is a flange member 8 as part of the backing plate 2.

Before continuing with a discussion of brake block 6, it must be remembered that a fundamental of friction properties is the "coefficient of friction" which is the ratio between the tangentional friction force and the vertical friction force acting between bodies in relative contact. There is also a static friction for surfaces at rest and a dynamic friction for surfaces in motion. When friction increases with speed, it is characterized by having a positive friction, whereas when it decreases with speed it is known as having a negative friction characteristic. Hereinafter the term "positive friction" means that the coefficient of friction increases with speed of sliding and a "high" coefficient of friction is greater than 0.10.

Brake block 6 is a molded composition friction material. The composition friction material includes a high positive friction (HPF) solid friction modifier. Such high positive friction modifier is added to the composition of brake block 6 to establish a predetermined friction level between the wheel tread of a railway vehicle and the top of the rail. Such friction enhancer is preferably a powderized mineral and may be selected from the group consisting of calcium carbonate, magnesium carbonate, magnesium silicate, bentonite, coal dust, barium sulphate, asbestos, aluminum silicate, silica (amorphous, synthetic or natural), slate powder, diatomaceous earth, ground quartz, zinc stearate, aluminum stearate, zinc oxide, iron oxide, antimony oxide, dolomite, lead carbonate, calcium sulphate, naphthalene synemite, and powderized polyethylene fibers or combinations thereof.

The wheel tread of such railway vehicle is engaged by a brake block 6 which includes such HPF solid friction modifier. Railway vehicle as used herein is intended to include passenger and freight locomotives, nonpowered railroad cars as well certain maintenance way vehicles. With railway vehicles having powered axles, such as locomotives for passenger trains, and nonpowered axles, which would essentially be railway vehicles other than locomotives, such brake block 6 with HPF treats the wheel tread with the solid high positive friction modifier to establish a friction level of between about 0.30 and about 0.40 between the wheel tread and the top of the rail. In a presently preferred embodiment of the invention for use with locomotives for passenger trains and railway vehicles having nonpowered axles such friction level is between about 0.32 and about 0.38.

On powered axles, such as on locomotives for freight trains, maximum adhesion is desired to take full advantage of the available tractive effort. Thus, brake block 6 includes a very high positive friction (VHPF) solid friction modifier. Such VHPF material treats the wheel tread with such solid friction modifier to establish a friction level of between about 0.40 and about 0.50 between the wheel tread and the top of the rail. In a presently preferred embodiment of the invention for use on powered axles, such as locomotives for freight trains, such friction level is between about 0.42 and about 0.48. Such VHPF friction modifiers are also preferably powderized mineral and may also be selected from the same group of positive friction enhancers discussed supra.

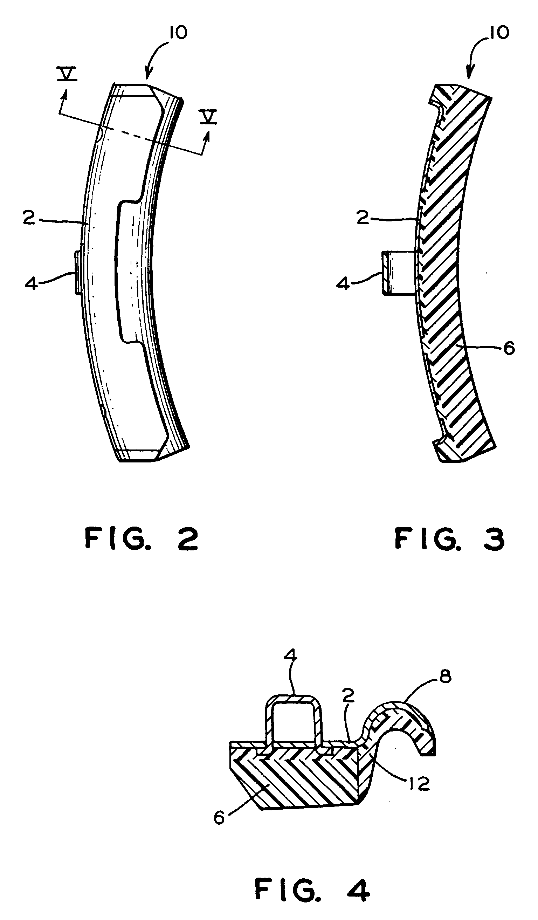

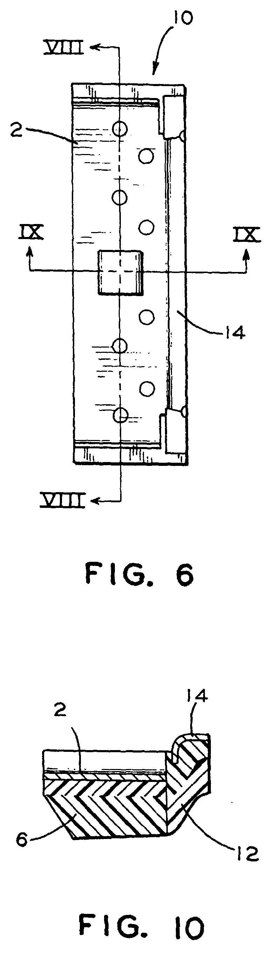

Reference is now made, more specifically, to the drawing Figures 4 and 5. Illustrated therein is a cross-sectional view of brake shoe 10 showing the brake block 6 and the full flange member 8 along with the second friction material 12 that is affixed to such full flange member 8. Such second friction material 12 includes a low coefficient of friction (LCF) solid friction modifier. Such LCF solid friction modifier may be selected from the group consisting of molybdenum disulfide and graphite or combinations thereof.

The second friction material 12, with LCF, engages the flange area of the railroad wheel adjacent the rail. The flange area of the wheel and, through transfer from the wheel, the gage face of the railed track is treated with such LCF solid friction modifier which establishes a low friction level of between about 0.08 and about 0.15 at the wheel flange and rail gage face interface. In a preferred embodiment, such second friction material with the LCF solid friction modifier establishes a friction level of between about 0.09 and about 0.12 at the wheel flange and rail gage face interface.

The brake shoe 10 design has the LCF carrying friction material 12 in contact with the wheel flange and such HPF and VHPF composition friction carrying material 6 on the tread contacting area of the brake shoe 10. The exact shoe type and configuration depends on the application, however, the various materials are integrally molded and are specifically formulated to meet particular braking needs and friction management levels needed by the operating railroad.

Reference is now made to Figures 6, 7 and 8. Illustrated therein is an alternate embodiment of the invention. Brake shoe 10 has backing plate 2 and key bridge 4 as in the previous embodiment, however, this embodiment is modified in that there is just a partial flange member 14 instead of a full flange member 8 as part of brake shoe 10.

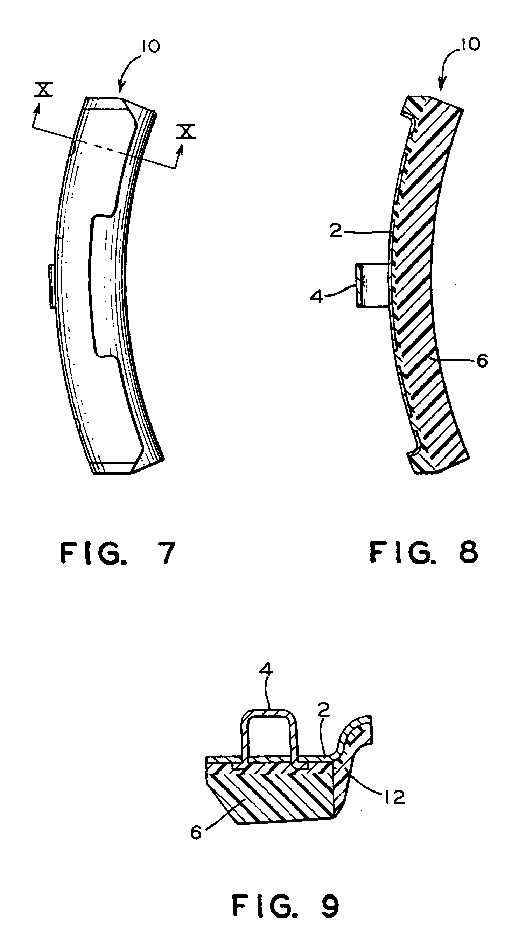

Reference in now made to Figures 9 and 10. Illustrated therein are cross sectional views of brake shoe 10 with partial flange member 14. Basically the only difference in this embodiment is that LCF friction material 12 and the partial flange member 14 are truncated so that friction material 12 only engages a smaller part of the wheel flange of the railroad wheel. Both flange embodiments incorporate a similar LCF friction modifier in such second friction composition material 12. Such partial flange member 14 may either be straight or have an arcuate shape in a direction transverse to the longitudinal direction of such backing plate 2.

The friction management brake shoe of the present invention provides the recognized benefits of the composition brake shoe as well as the benefits of wheel to rail friction management in one package. This means that operating railroads can implement friction management without the addition of any new systems or brackets and continue friction management of their rail system with no additional maintenance activities, simply continue changing brake shoes when the old shoes are worn out. Of course, the logistics of maintaining additional systems, such as on-board lubricators or wayside lubricators (i.e. purchase, inventory, changeout labor and on going system maintenance) would no longer be necessary.

The general benefits of friction management are extended wheel life, reduced energy consumption, reduced noise levels and extended rail life. The application of such VHPF solid friction modifier to the wheels on powered locomotive axles provides improved tractive effort and can possibly result in the elimination of on-board sanding systems. The application of such HPF solid friction modifier to all wheels on nonpowered axles in a train and on powered axles on locomotives for passenger trains optimizes the friction between the wheel and the top of the rail providing energy savings, decreased wheel and rail wear, reduced wheel slide occurrence, reduced wheel shelling and spalling, reduced lateral forces or L/V ratios in curves and reduced noise levels.

The application of LCF friction modifier to the wheel flange and resulting transfer to the rail gage face reduces wheel and rail wear, reduces energy consumption, reduces noise levels and reduces the likelihood of rail climb. The application of LCF provides the benefits and could eliminate the need for on-board flange lubrication (grease) systems or wayside track lubrication (grease) systems. The replacement of grease type lubricants and elimination of sand application, which are both presently in use, would have a very positive environmental impact.

While both the presently preferred and an alternative embodiments of the present invention have been described in detail above it is understood that various other adaptations and modifications of the present invention can be envisioned by those persons who are skilled the relevant art of brake shoes without departing from either the spirit of the invention or the scope of the appended claims.

## Claims

1. A friction management brake shoe adapted to engage each of a tread and a flange of a wheel of a railway vehicle via which such railway vehicle is guidably supported on a railed track, said friction management brake shoe comprising:
(a) a backing plate having a flange member;
(b) a brake lining affixed to said backing plate and having a braking surface engageable with such wheel tread of such railway vehicle, said brake lining including a first friction composition material formed with at least one of a solid high positive friction modifier and a solid very high positive friction modifier which establishes a predetermined required friction level between such wheel tread and such railed track for stopping such railway vehicle; and
(c) a flange part affixed to said flange member of said backing plate and having a friction surface engageable with such wheel flange of such railway vehicle, said flange part including a second friction composition material formed with a solid low coefficient of friction modifier which establishes a friction level of between about 0.08 and 0.15 at an interface between such wheel flange and such railed track.

2. A friction management brake shoe, according to claim 1, wherein said first friction composition material is formed with said solid high positive friction modifier and engages wheel treads of one of powered axles on locomotives of passenger trains and nonpowered axles of other railway vehicles and establishes said predetermined required friction level between such wheel tread and such railed track.

3. A friction management brake shoe, according to claim 2, wherein said predetermined required friction level is between about 0.30 and about 0.40.

4. A friction management brake shoe, according to claim 3, wherein said predetermined required friction level is between about 0.32 and about 0.38.

5. A friction management brake shoe, according to claim 1, wherein said first composition friction material is formed with said solid very high positive friction modifier and engages wheel treads on powered axles of locomotives of freight trains to establish a friction level of between about 0.40 and about 0.50 between such wheel tread and such railed track.

6. A friction management brake shoe, according to claim 5, wherein said first composition friction material is formed with said solid very high positive friction modifier and engages wheel treads on powered axles of locomotives of freight trains to establish a friction level of between about 0.42 and about 0.48 between such wheel tread and such railed track.

7. A friction management brake shoe, according to claim 1, wherein said second friction material formed with said solid low coefficient of friction modifier establishes a friction level between about 0.09 and 0.12 at an interface between such wheel flange and such railed track.

8. A friction management brake shoe, according to claim 1, wherein said first friction material and said second friction material are integrally molded.

9. A friction management brake shoe, according to claim 1, wherein said at least one of said high positive friction modifier and said solid very high positive friction modifier are selected from a group consisting of calcium carbonate, magnesium carbonate, magnesium silicate, bentonite, coal dust, barium sulphate, asbestos, aluminum silicate, amorphous silica, synthetic silica natural silica, slate powder, diatomaceous earth, ground quartz, zinc stearate, aluminum stearate, zinc oxide, iron oxide, antimony oxide, dolomite, lead carbonate, calcium sulphate, naphthalene synemite, and powderized polyethylene fibers and various combinations thereof.

10. A friction management brake shoe, according to claim 1, wherein said solid low coefficient of friction modifier is selected from a group consisting of molybdenum disulfide and graphite and combinations thereof.

11. A friction management brake shoe adapted to engage each of a tread and a flange of a wheel of a railway vehicle via which such railway vehicle is guidably supported on a railed track, said friction management brake shoe comprising:
(a) a backing plate having a flange member, said flange member having a generally convex shape in a longitudinal direction and a generally arcuate shape in a direction transverse to said longitudinal direction;
(b) a brake lining affixed to said backing plate and having a braking surface engageable with such wheel tread of such railway vehicle, said brake lining including a first friction composition material formed with at least one of a solid high positive friction modifier and a solid very high positive friction modifier which establishes a predetermined required friction level between such wheel tread and such railed track for stopping such railway vehicle; and
(c) a flange part having a generally convex shape in a longitudinal direction and a generally arcuate shape in a direction transverse to said longitudinal direction, said flange part affixed to said flange member of said backing plate and having a friction surface engageable with such wheel flange of such railway vehicle, said flange part including a second friction composition material formed with a solid low coefficient of friction modifier which establishes a friction level of between about 0.08 and 0.15 at an interface between such wheel flange and such railed track.

12. A friction management brake shoe, according to claim 11, wherein said first friction composition material is formed with said solid high positive friction modifier and engages wheel treads of one of powered axles on locomotives of passenger trains and nonpowered axles of other railway vehicles and establishes said predetermined required friction level between such wheel tread and such railed track.

13. A friction management brake shoe, according to claim 12, wherein said predetermined required friction level is between about 0.30 and about 0.40.

14. A friction management brake shoe, according to claim 13, wherein said predetermined required friction level is between about 0.32 and about 0.38.

15. A friction management brake shoe, according to claim 11, wherein said flange member of said backing plate and said flange part of said second friction composition material affixed to said flange member are truncated.

16. A friction management brake shoe, according to claim 11, wherein said first composition friction material is formed with said solid very high positive friction modifier and engages wheel treads on powered axles of locomotives of freight trains to establish a friction level of between about 0.40 and about 0.50 between such wheel tread and such railed track.

17. A friction management brake shoe, according to claim 16, wherein said first composition friction material is formed with said solid very high positive friction modifier and engages wheel treads on powered axles of locomotives of freight trains to establish a friction level of between about 0.42 and about 0.48 between such wheel tread and such railed track.

18. A friction management brake shoe, according to claim 11, wherein said second friction material formed with said solid low coefficient of friction modifier establishes a friction level between about 0.09 and 0.12 at an interface between such wheel flange and such railed track.

19. A friction management brake shoe, according to claim 11, wherein said first friction material and said second friction material are integrally molded.

20. A friction management brake shoe, according to claim 10, wherein said at least one of said solid high positive friction modifier and said solid very high positive friction modifier are selected from a group consisting of calcium carbonate, magnesium carbonate, magnesium silicate, bentonite, coal dust, barium sulphate, asbestos, aluminum silicate, amorphous silica, synthetic silica natural silica, slate powder, diatomaceous earth, ground quartz, zinc stearate, aluminum stearate, zinc oxide, iron oxide, antimony oxide, dolomite, lead carbonate, calcium sulphate, naphthalene synemite, and powderized polyethylene fibers and various combinations thereof.

21. A friction management brake shoe, according to claim 11, wherein said solid low coefficient of friction modifier is selected from a group consisting of molybdenum disulfide and graphite and combinations thereof.

22. A friction management brake shoe adapted to engage each of a tread and a flange of a wheel of a railway vehicle via which the railway vehicle is guidably supported on a railed track, said friction management brake shoe comprising:
(a) a backing plate having a flange member, said flange member having a generally convex shape in a longitudinal direction and a generally straight shape in a direction transverse to said longitudinal direction;
(b) a brake lining affixed to said backing plate and having a braking surface engageable with such wheel tread of such railway vehicle, said brake lining including a first friction composition material formed with at least one of a solid high positive friction modifier and a solid very high positive friction modifier which establishes a predetermined required friction level between such wheel tread and such railed track for stopping such railway vehicle;
(c) a lubricating flange portion having a generally convex shape in a longitudinal direction and a generally straight shape at least in a direction transverse to said longitudinal direction where said lubricating flange portion is affixed to said flange member, said lubricating flange portion having a friction surface engageable with such wheel flange of such railway vehicle, said lubricating flange portion including a second friction composition material formed with a solid low coefficient of friction modifier which establishes a friction level of between about 0.08 and 0.15 at an interface between such wheel flange and such railed track.

23. A friction management brake shoe, according to claim 22, wherein said first friction composition material is formed with said solid high positive friction modifier and engages wheel treads of one of powered axles on locomotives of passenger trains and nonpowered axles of other railway vehicles and establishes said predetermined required friction level between such wheel tread and such railed track.

24. A friction management brake shoe, according to claim 23, wherein said predetermined required friction level is between about 0.30 and about 0.40.

25. A friction management brake shoe, according to claim 24, wherein said predetermined required friction level is between about 0.32 and about 0.38.

26. A friction management brake shoe, according to claim 22, wherein said first composition friction material is formed with said solid very high positive friction modifier and engages wheel treads on powered axles of locomotives of freight trains to establish a friction level of between about 0.40 and about 0.50 between such wheel tread and such railed track.

27. A friction management brake shoe, according to claim 26, wherein said first composition friction material is formed with said solid very high positive friction modifier and engages wheel treads on powered axles of locomotives of freight trains to establish a friction level of between about 0.42 and about 0.48 between such wheel tread and such railed track.

28. A friction management brake shoe, according to claim 22, wherein said second friction material formed with said solid low coefficient of friction modifier establishes a friction level between about 0.09 and 0.12 at an interface between such wheel flange and such railed track.

29. A friction management brake shoe, according to claim 22, wherein said first friction material and said second friction material are integrally molded.

30. A friction management brake shoe, according to claim 22, wherein said at least one of said solid high positive friction modifier and said solid very high positive friction modifier are selected from a group consisting of calcium carbonate, magnesium carbonate, magnesium silicate, bentonite, coal dust, barium sulphate, asbestos, aluminum silicate, amorphous silica, synthetic silica natural silica, slate powder, diatomaceous earth, ground quartz, zinc stearate, aluminum stearate, zinc oxide, iron oxide, antimony oxide, dolomite, lead carbonate, calcium sulphate, naphthalene synemite, and powderized polyethylene fibers and various combinations thereof.

31. A friction management brake shoe, according to claim 22, wherein said solid low coefficient of friction modifier is selected from a group consisting of molybdenum disulfide and graphite and combinations thereof.
